# EUROPÄISCHE PATENTSCHRIFT

(11) **EP 3 420 566 B1**
(45) Veröffentlichungstag und Bekanntmachung des Hinweises auf die Patenterteilung: **02.08.2023**
(21) Anmeldenummer: 17714648.7
(22) Anmeldetag: 22.02.2017
(51) Int. Cl.: H01B 12/16, H02G 5/10, H02G 5/06

(54) **STROMSCHIENE UND STROMSCHIENENSYSTEM**
BUS BAR AND BUS BAR SYSTEM
BARRE CONDUCTRICE ET SYSTÈME DE BARRES CONDUCTRICES

(30) Priorität: 22.02.2016 DE 102016103014; 22.02.2016 DE 202016100916 U
(43) Veröffentlichungstag der Anmeldung: 02.01.2019
(73) Patentinhaber: Vision Electric Super Conductors GmbH, 67663 Kaiserslautern (DE)
(72) Erfinder: HUWER, Stefan, 67715 Geiselberg (DE); REISER, Wolfgang, 67657 Kaiserslautern (DE)
(74) Vertreter: Gille Hrabal Partnerschaftsgesellschaft mbB Patentanwälte
(86) Internationale Anmeldenummer: PCT/EP2017/054027
(87) Internationale Veröffentlichungsnummer: WO 2017/144518

(56) Entgegenhaltungen:
- JP-A- S6 016 116
- JP-A- H01 149 311
- JP-A- H10 223 066
- JP-A- 2000 082 347
- JP-A- 2016 001 582

## Beschreibung

Die Erfindung betrifft eine Stromschiene und ein Stromschienensystem zur Leitung eines hohen elektrischen Stromes. Insbesondere betrifft die Erfindung eine Stromschiene, die als Gleichstromverbindung für Hochstromverbraucher, insbesondere Aluminium-, Kupfer- oder Zink-Elektrolysen, Graphitisierungsanlagen, chemische Elektrolysen, wie z.B. Chlor- oder Fluorelektrolyse, DC-Netze oder auch in Rechenzentren mit Versorgung der Server auf DC-Basis, eingesetzt werden kann.

Derartige Stromschienen müssen Gleichstrom in Größenordnungen von ca. 10 bis mehreren 100 kA tragen. Gemäß Stand der Technik ist dazu ein massiver Einsatz an geeigneten leitfähigen Materialien, insbesondere Kupfer oder Aluminium nötig, welche zudem durch aufwändige Mechanik und Tragwerke gehalten und verlegt werden müssen. Auf längeren Strecken ergeben sich hohe elektrische Verluste.

Supraleiter (SL) sind dafür bekannt, dass bei Gleichstromanwendungen keine elektrischen Verluste auftreten und hohe Stromdichten möglich sind, wobei die sehr niedrigen Sprungtemperaturen unterhalb von 23 Kelvin den Einsatz von teuren Kühltechniken erfordern. Diese Supraleiter werden heute als Tieftemperatursupraleiter (TTSL) bezeichnet, da ihre Betriebstemperatur bei 4,2 Kelvin oder niedriger liegt. Seit Entdeckung der Supraleitung in Ba-La-Cu-O-Verbindungen sind zahlreiche Hochtemperatursupraleiter (HTSL) gefunden wurden, deren kritische Temperaturen zum Teil mehr als 100 Kelvin über denen der TTSL liegen. Die bisher höchsten Sprungtemperaturen unter Normaldruck wurden mit 133 Kelvin und 135 Kelvin an Hg-Ba-Ca-Cu-O-Verbindungen gemessen. Ein Teil der über fünfzig heute bekannten HTSL weisen Sprungtemperaturen auf, die über der Siedetemperatur des flüssigen Stickstoffs von 77 Kelvin liegen. Dies ermöglicht neue technische Anwendungen der Supraleitung, da die Kühlung mit flüssigem Stickstoff um Größenordnungen billiger als die mit flüssigem Helium ist, welchen die TTSL benötigen. Andere Flüssigkeiten kommen auch in Betracht, sofern ihr Siedepunkt unterhalb der Sprungtemperatur der verwendeten Supraleiter liegt. Es existieren auch Mitteltemperatursupraleiter (MTSL), wie z. B. MgB₂ mit einer Sprungtemperatur von 39 Kelvin und einer typischen Betriebstemperatur von 20-25 Kelvin.

Wenn man Supraleiter bei den oben genannten Stromschienen (SL-Stromschiene) einsetzt, können zur Erhöhung der Stromtragfähigkeit diese SL gestapelt angeordnet sein und somit ein starres oder flexibles Band bilden. Es kann auch eine vorzugsweise um ihre Längsachse biegesteife Tragschiene mit sich im Wesentlichen über die Länge der Tragschiene erstreckenden SL eingesetzt werden. Das grundsätzliche Problem ist dabei, dass die Stromschiene über eine große Länge auf eine Temperatur unterhalb der Sprungtemperatur gekühlt werden muss, was Probleme bereitet: Eine längliche dünne Struktur nimmt viel Wärme aus der Umgebung auf, die zudem über eine große Entfernung entlang der Stromschiene abgeführt werden muss. Die Wärmeleitung in einem Metall wäre über die geforderten Strecken von mehreren Metern nicht ausreichend um die Wärme abzuführen in Richtung einer Kältemaschine, insbesondere wegen des angestrebten Temperaturgefälles von weniger als 5 Kelvin. Es ist nicht wirtschaftlich entlang der SL-Stromschiene in kurzen Abständen Kältemaschinen anzuordnen. Daher wird gemäß Stand der Technik ein Kühlkreislauf wie folgt eingesetzt:
Eine aus DE 38 11 050 C2 bekannte SL-Stromschiene weist ein dickwandiges Rohr auf, welches als Wärmeschild dient für den darin geführten SL. Das Rohr besteht aus einem guten Wärmeleiter, beispielsweise Aluminium oder Kupfer, in dessen Wandung in axialer Richtung verlaufende Leitungen zum Zirkulieren von gekühltem flüssigen Stickstoff mittels einer Umwälzpumpe eingebracht sind um die Schiene auf voller Länge zu kühlen. Die Handhabung von flüssigem, gekühltem Stickstoff erfordert apparativen Aufwand, Wartung und birgt Gefahrenpotential und kann auch nicht überall eingesetzt werden, z.B. dort wo der Austritt größerer Mengen des Stickstoffs Menschleben gefährden oder Anlagenteile unter gefährlich hohen Druck setzen und hohe Schäden verursachen könnte. Das Rohr ist isoliert gegen die Umgebung durch eine Multi-Layer-Isolierung mit wärmereflektierender Decklage z. B. aus aluminiumbeschichteter Polyesterfolie. Ein solches System mit einem Außendurchmesser von ca. 50-200 mm nimmt ca. 0,5 - 3 W Wärme auf pro Meter Schiene bei einer Innentemperatur von 77 Kelvin und einer Umgebungstemperatur von 293 Kelvin. Entlang der Zirkulationsstrecke ergeben sich zwangsläufig Temperaturunterschiede, die lokal kritische Werte vorübergehend überschreiten können.

Zur Wärmeübertragung von A nach B sind aus dem Stand der Technik Wärmerohre bekannt, siehe z. B.: US 2007/0199682 A1. Diese erlauben unter Nutzung von Verdampfungswärme eines Mediums eine hohe Wärmestromdichte. Es können auf kleiner Querschnittsfläche große Wärmemengen transportiert werden. Es gibt die Bauform a) Heatpipe und b) Zwei-Phasen-Thermosiphon. Das grundlegende Funktionsprinzip ist bei beiden Bauformen gleich, der Unterschied liegt im Transport des Arbeitsmediums, der aber generell passiv erfolgt, d. h. ohne Hilfsmittel wie etwa eine Umwälzpumpe.

JP H10 223066 A und JP 2000 082347 A offenbaren jeweils eine gattungsgemäße Stromschiene mit einem Supraleiter in einem Gehäuse, mit welchem ein Wärmerohr thermisch leitend verbunden ist.
a) Bei schwerkraftgetriebenen Wärmerohren (Zwei-Phasen-Thermosiphon oder auch Gravitationswärmerohre) kreist das Medium aufgrund der Schwerkraft. Dadurch fließt das Wärmeträgermedium selbstständig in den Verdampfer zurück. Sind Thermosiphons in flacher Neigung ausgerichtet, können sie austrocknen, falls das kondensierte Medium nicht schnell genug zurückfließt.
b) Heatpipes hingegen nutzen das Docht- bzw. Kapillarprinzip, um das kondensierte Fluid mittel Kapillaren zurück zum Verdampfer zu führen. Der Prozess ist dadurch lageunabhängig. Verwendung finden Heatpipes überall dort, wo hoher Wärmestrom in beliebiger Orientierung gefordert ist.

Durch geschickte Wahl des Arbeitsmediums des Wärmerohrs können Einsatztemperaturen von wenigen Kelvin bis ca. 3000 Kelvin eingestellt werden.

Wärmerohre haben ein "warmes Ende", welches dort angesetzt ist, wo die Wärme entsteht, z. B. am Prozessor eines Laptops, der so beengt untergebracht ist, dass die Wärme nicht durch Kühlrippen und Lüfter abgeführt werden kann. Das warme Ende nimmt also die Wärme in das Wärmerohr auf. Sie haben eine "kaltes Ende", von welchem die vom Wärmerohr aufgenommene Wärme an die Umgebung abgegeben wird, z. B.: mittel angesetzter Kühlrippen und Lüfter beim Notebook. Der dazwischen liegende Leitungsbereich dient als Leitung für den Wärmetransport durch das Wärmeträgermedium. Bei Heatpipes, welche das Docht- bzw. Kapillarprinzip nutzen, werden die Kapillare in der Regel durch röhrenartige Geflechte bereitgestellt welche sich zwischen dem kalten und dem warmen Ende im Leitungsbereich erstrecken.

Es ist daher Aufgabe der vorliegenden Erfindung eine verbesserte Stromschiene zu schaffen, die besonders für die oben genannten Gleichstrom-Hochstrom Anwendungen geeignet ist.

Diese Aufgabe wird gelöst durch eine Stromschiene mit den Merkmalen des Hauptanspruchs. Vorteilhafte Ausgestaltungen sind Gegenstand der Unteransprüche.

Wie aus dem Stand der Technik bekannt, umfasst die Stromschiene für Hochstromverbraucher, einen Supraleiter zum Leiten eines elektrischen Stroms, welcher sich natürlich entlang der Stromschiene erstreckt. Dieser hat ein Gehäuse mit einer Kühlvorrichtung zum Kühlen des Supraleiters auf eine Temperatur unterhalb der Sprungtemperatur des Supraleiters. Erfindungsgemäß besteht die Besonderheit nun darin, dass die Kühlvorrichtung mehrere Wärmerohre umfasst. Es muss daher im Betrieb kein Kältemittelrohr gefüllt und gewartet werden. Der Wärmewiderstand eines Wärmerohrs ist deutlich kleiner als der von Metallen. Das Verhalten der Wärmerohre kommt daher der isothermen Zustandsänderung sehr nah. Es herrscht eine beinah konstante Temperatur über die Länge des Wärmerohrs. Bei gleicher Übertragungsleistung sind deswegen wesentlich leichtere Bauweisen als bei herkömmlichen Wärmeüberträgern unter gleichen Einsatzbedingungen möglich. Das Wärmerohr umfasst: ein verdampfbares Wärmeträgermedium, ein kaltes Ende (Kondensationszone), ein warmes Ende (Verdampfungszone) und einen Leitungsbereich zwischen dem kalten und dem warmen Ende zum Zirkulieren des Wärmeträgermediums zwischen dem warmen und dem kalten Ende. Erfindungsgemäß ist das Wärmerohr über seine gesamte Länge thermisch mit dem Gehäuse verbunden, d. h. die warme Zone ist ausgedehnt bis unmittelbar an die Kälteeinflusszone des Kälteaggregats, was zugleich bedeutet, dass funktionell betrachtet der im normalen Einsatz lange Leitungsbereich des Wärmerohrs Wärme aus der Umgebung aufnimmt und somit zugleich als "langes warmes Ende" wirkt. Das Wärmerohr wird - selbst wenn es baugleich ist - dadurch anders betrieben als dem Fachmann geläufig: In Stand der Technik, z. B.: zur CPU Kühlung, haben die Heatpipes ein vergleichsweise kurzes warmes Ende an der CPU, ebenfalls kurzes kaltes Ende an den vom Lüfter angeblasenen Kühlrippen, und dazwischen einen vergleichsweise langen Leitungsbereich, der eine lange adiabate Zone bildet. Erfindungsgemäß ist diese adiabate Zone aber sehr kurz bzw. geht gegen Null. Erfindungsgemäß kann hier der lange Leitungsbereich wegen seiner großen Länge eine große Wärmeübertragungsfläche bilden. Der Leitungsbereich im Sinn der Erfindung ist nicht auf die Leitung, also das Zirkulieren des Wärmeträgermediums, beschränkt sondern leitet genauso wie das warme Ende die Wärme aus dem Gehäuse ab. Trotzdem wird hier auf die Geometrie abgestellt und daher der Begriff "Leitungsbereich" verwendet.

Der Einsatz vieler und daher vergleichsweise kleinvolumiger Wärmerohre anstelle der aus dem Stand der Technik bekannten Systemen mit nur einem ausreichend groß ausgelegten Wärmerohr bei großer Länge, ermöglicht das Entfallen der vorgeschriebenen aufwendigen Dokumentation oder wiederkehrenden Druckprüfungen.

Um die notwendige Wärmemenge vom Gehäuse abzuführen, erstrecken sich die mehreren Wärmerohre nebeneinander, insbesondere parallel, entlang der Stromschiene. Dabei können sie, möglichst gleichmäßig, um den Supraleiter herum angeordnet sein, sei es, dass die Wärmerohre im Inneren, im Querschnitt oder am Äußeren des Gehäuses angeordnet sind.

Ein Kühlaggregat zum Kühlen des Wärmerohrs ist mit dem kalten Ende des Wärmerohrs thermisch leitend verbunden und dient somit dem Abführen der Wärme welche dem Wärmerohr über das Gehäuse aus der Umgebung zugeführt wird. Der Wärmeübergang findet über Kontaktflächen und nicht über ein zwischen Aggregat und Wärmerohr fließendes Medium statt. Der Austausch bzw. die Montage erfordert daher kein Befüllen.

Zum Aufbau einer längeren Stromschiene ist dabei das Gehäuse derart ausgestaltet, dass eine Vielzahl der Gehäuse an ihren Enden miteinander in axialer Richtung verbindbar sind und der Supraleiter durch die Vielzahl der miteinander verbundenen Gehäuse geführt und unterhalb der Sprungtemperatur gekühlt werden kann. Da jedes einzelne Gehäuse seine eigene Kühlvorrichtung und seinen eigenen abgeschlossenen Kreislauf in Gestalt des Wärmeträgermediums des Wärmerohrs umfasst, vereinfacht sich der Aufbau längerer Strecken, da anders als beim Stand der Technik keine Kältemittelrohre miteinander verbunden, gefüllt und gewartet werden müssen.

Zweckmäßigerweise verläuft das Gehäuse gerade, wenngleich auch für Biegungen gebogenen Abschnitte denkbar sind.

Vorzugsweise ist das Wärmerohr als Heatpipe ausgeführt, welche im Vergleich zum Wärmerohr in der Ausführung Thermosiphon, kaum zum Austrocknen neigt, da der Flüssigkeitsstrom bauartbedingt durch die Kapillare maßgeblich verbessert wird, was zu einem höheren übertragbaren Wärmestrom führt. Die Kapillarstruktur sorgt außerdem dafür, dass, anders als beim Thermosiphon, die Wärme überall und über eine bestimmte Höhe zugeführt werden kann, also Neigungen des Stromschiene kein Problem darstellen.

Wenn im Leitungsbereich Kapillare zum Fördern des Wärmeträgermediums zwischen dem kalten und dem warmen Ende vorgesehen sind, erfolgt die Zirkulation des kondensierten Mediums in Richtung auf das warme Ende selbstständig durch Kapillarkräfte. Besonders bevorzugt ist hier aber, dass diese direkt in die Innenwand der Heatpipe integriert sind. Dies kann besonders vorteilhaft realisiert werden durch Kapillare, die als entlang der Heatpipe verlaufende Schlitze in der Innenwand des Leitungsbereichs ausgebildet sind. Es wurde in Versuchen eine wirksamere Kühlung erzielt, als bei der Verwendung von einem Geflecht als Kapillare. Darüber hinaus können die Kapillare im Strangpressverfahren direkt beim Herstellen des Gehäuses oder der Heatpipe erzeugt werden. Sie sind also in die Innenwand integriert und der Wärmeübergang zwischen Gehäuse und Wärmeträgermedium ist besonders gut. Vorzugsweise ergibt sich ein schalenartiger Aufbau zum Abführen und Fernhalten der Wärme vom Supraleiter, wenn das Gehäuse mit dem Wärmerohr thermisch verbunden ist, das Gehäuse den Supraleiter umschließt und das Gehäuse schließlich vorzugsweise von einer thermischen Isolierung umgeben ist.

Insbesondere wurde erkannt, dass mittels Strangpressprofil wirtschaftlich das Gehäuse mit Wärmerohren ausgestattet werden kann. Dazu ist der Leitungsbereich und vorzugsweise das kalte Ende und/oder warme Ende des Wärmerohrs als geschlossener Hohlraum in das Gehäuse integriert. Dieses kann als Strangpressprofil, insbesondere aus Aluminium oder einer Aluminiumlegierung, hergestellt werden. Grundsätzlich kann aber das Wärmerohr auf beliebige Art mit dem Gehäuse auf geeignete Weise thermisch leitend verbunden sein, z. B. durch Ansetzen an die Innen- oder Außenseite des Gehäuses, insbesondere durch stoff-und/oder formschlüssige Verbindung, oder durch Bildung des Gehäuses durch umlaufend, insbesondere ringartig, nebeneinander gesetzte Wärmerohre.

In einem einfachen Fall kann das vorzugsweise als Rohr ausgebildete Gehäuse daher eine Wandstärke aufweisen, in welcher das Wärmerohr oder eine Vielzahl der Wärmerohre integriert ist. Es handelt sich um ein dickwandiges Rohr mit sich in Längsachsenrichtung erstreckenden Öffnungen.

Ein kompakter Aufbau wird erreicht, wenn der Supraleiter, das Gehäuse und die thermische Isolierung koaxial von innen nach außen angeordnet sind und das oder die Wärmerohre parallel zur Längsachse des Gehäuses verlaufen.

Der erfindungsgemäße Aufbau ist von Vorteil in Bezug auf die EU-Druckgeräterichtlinie, die umfangreiche Dokumentation und ggf. regelmäßige Wartung und Prüfung vorschreibt, wenn bestimmte "Druck x Volumen-Verhältnisse" überschritten werden. Der erfindungsgemäße Aufbau ermöglicht, diese Verhältniszahl so niedrig halten, dass keine regelmäßig wiederkehrende Prüfung nötig ist, ähnlich wie z. B. bei den kleinen Stickstofffedern oder Gasdruckfedern an der Automobilheckklappe. Wenn jedes Wärmerohr derart ausgebildet ist, dass die Kennzahl Druck mal Volumen kleiner als 50 bar mal Liter ist oder das Volumen kleiner als 1 Liter ist, kann gegenüber anderen Systemen mit Wärmträgermedium mit größeren Durchmessern bei großen Längen, z. B. Durchmesser größer 25 mm bei Länge größer als 2 m die umfangreiche Dokumentation gemäß EU-Richtlinie und die ggf. erforderliche wiederkehrende Druckprüfung entfallen. Damit werden insbesondere supraleitende Stromschienen für große Ströme in der Größenordnung von 500 kA möglich, da diese mit vielen kleinen Heatpipes statt weniger großen Heatpipes gekühlt werden können.

Die bislang beschriebene Erfindung ist wegen der Wärmerohre besonders geeignet für die Kühlung bis herunter zur Solidustemperatur von Stickstoff und es kommen daher nur solche Supraleiter in Betracht, deren Sprungtemperatur oberhalb dieser Solidustemparatur liegt, also HTSL. Wenn nun im Inneren des Gehäuses eine weitere Kühlleitung vorgesehen ist, welche thermisch leitend mit dem Supraleiter verbunden ist oder diesen umgibt, wobei vorzugsweise die weitere Kühlleitung mit einem weiteren Kühlaggregat verbundenen ist und die Kühlleitung beispielsweise ein den Supraleiter einhüllendes Rohr aus Aluminium, Aluminiumlegierung, Kupfer, Kupferlegierung, oder ein Rohr mit einem weiteren Wärmerohr oder ein weiteres Wärmerohr ist oder umfasst, können auch MTSL bzw. TTSL eingesetzt werden. Es liegt also ein zweistufiger Kühlprozess vor, wobei die zweite Stufe bereits von einem sehr geringen Temperaturniveau ausgehen kann.

Dabei kann vorzugsweise ein zweistufiges Kälteaggregat besonders wirtschaftlich eingesetzt werden, dessen erste Stufe mit den Wärmerohren des Gehäuses verbunden ist. Die weitere Kühlleitung, die auf niedrigere Temperaturen des MTSL bzw. TTSL abgekühlt werden muss, ist dann mit dessen zweiter Stufe thermisch verbunden.

Wenn das Gehäuse sich beidseitig vom Kühlaggregat weg erstreckt und sich vom Kühlaggregat zwei Wärmerohre sich wegerstrecken, erhöht sich der notwendige minimale Abstand zwischen zwei Aggregaten und damit vermindert sich auch deren Anzahl. Diese müssen dann aber entsprechend größer dimensioniert sein, was aber in der Regel den Wirkungsgrad erhöht. Der Montage- und Wartungsaufwand sinkt entsprechend.

Vorzugsweise umfasst der Supraleiter gestapelt angeordnete Bänder aus supraleitendem Material, welche einen starren oder flexiblen Supraleiter bilden, um bei kompaktem Aufbau größere Stromstärken zu ermöglichen. Ein flexibler Supraleiter kann in das System eingesetzt werden und Ungeradheiten bzw. Bögen folgen, wobei ein Einschieben in das System möglich ist, ähnlich einem Kabel. Wenn der Supraleiter eine um seine Längsachse biegesteife Tragschiene aufweist, wird gegebenenfalls die Montage vereinfacht.

Weitere Vorteile ergeben sich aus der folgenden Beschreibung und den beigefügten Figuren. Ebenso können die vorstehend genannten und noch weiter ausgeführten Merkmale erfindungsgemäß jeweils einzeln oder in beliebigen Kombinationen miteinander verwendet werden. Die erwähnten Ausführungsbeispiele sind nicht abschließend zu verstehen und haben beispielhaften Charakter.

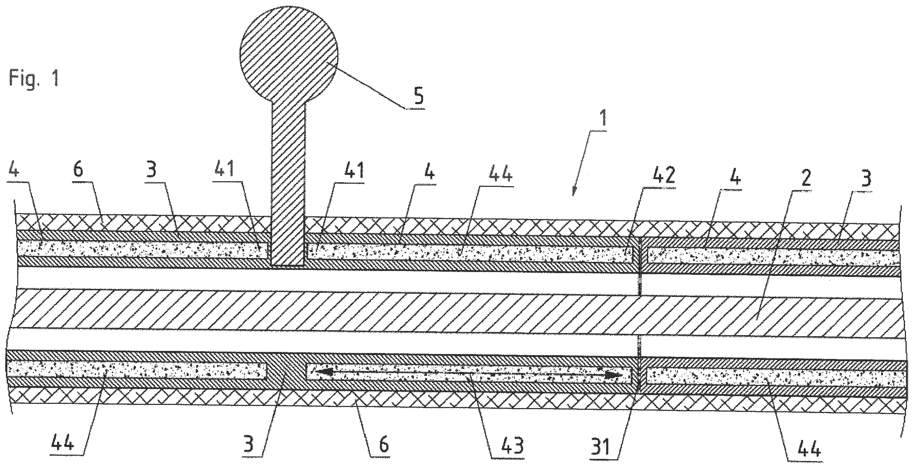

Fig. 1 zeigt zwei miteinander verbundene Stromschienen 1, durch welche axial ein Supraleiter 2 geführt ist, welcher sich entlang der Stromschiene erstreckt. Jede Stromschiene 1 umfasst ein Gehäuse 3 mit mehreren Wärmerohren in Gestalt von Heatpipes 4 zum Kühlen des Supraleiters 2 auf eine Temperatur unterhalb der Sprungtemperatur des Supraleiters. Die Heatpipes 4, das Gehäuse 3 und der Supraleiter 2 erstrecken sich entlang der Stromschiene 1 und das Gehäuse 3 umschließt den Supraleiter 2 und dient daher als Wärmeschild.

Wie aus dem Stand der Technik bekannt, umfasst die Heatpipe 4 ein verdampfbares Wärmeträgermedium 44, ein kaltes Ende 41 in der Nähe eines Kälteaggregats 5 mittels welchem das Medium 44 abgekühlt und kondensiert wird, ein warmes Ende 42 und einen Leitungsbereich 43 zwischen dem kalten und dem warmen Ende zum Zirkulieren des Wärmeträgermediums zwischen dem warmen und dem kalten Ende.

Das Kühlaggregat 5 bzw. der wärmeaufnehmende Teil desselben, ist mit dem kalten Ende 41 der Heatpipes 4 thermisch leitend verbunden, d. h. grenzt unmittelbar an diese an.

Die Gehäuse 3 der Stromschienen 1 grenzen an ihren Enden 31, d. h. Stirnflächen miteinander in axialer Richtung verbindbar an und der Supraleiter 2 durchläuft die Vielzahl der miteinander verbundenen Gehäuse 3.

Das Gehäuse 3 umschließt den Supraleiter 2 und ist von einer thermischen Isolierung 6 umgeben.

Im Ausführungsbeispiel gem. Fig. 1 ist das Gehäuse 3 als dickwandiges Rohr ausgebildet, in dessen Wandstärke eine Vielzahl von Heatpipes 4 integriert sind, z. B.: als Bohrung oder mittels Strangpressen bei der Herstellung des Rohres. Der Supraleiter 2, das Gehäuse 3 und die thermische Isolierung 6 sind koaxial von innen nach außen angeordnet und die Heatpipes 4 verlaufen parallel zur Längsachse des Gehäuses 3.

Das Gehäuse 3 erstreckt sich beidseitig vom Kühlaggregat 5 weg, ebenso wie die sich beidseitig entgegengesetzt vom Kühlaggregat wegerstreckenden Heatpipes.

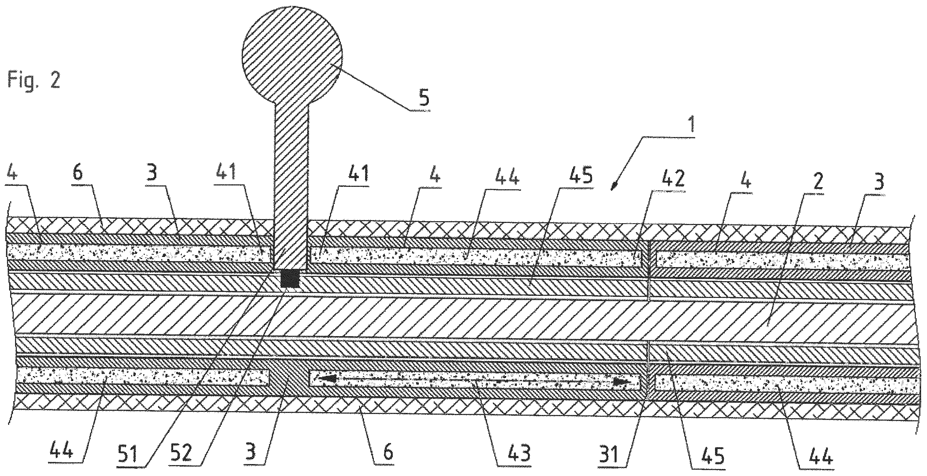

Fig. 2 zeigt abweichend eine Ausführung mit zweistufiger Kühlung 5, 51, 52, bei welcher im Inneren des Gehäuses 3 eine weitere Kühlleitung in Gestalt eines Kupferrohres 45 eingesetzt ist. Diese wird auf eine niedrigere Temperatur als das Gehäuse 3 gekühlt und umgibt den Supraleiter. Das Kupferrohr 45 ist daher hier mit der kälteren zweiten Stufe 52 des Kühlaggregats 5 verbunden, während die in das Gehäuse 3 integrierten Heatpipes 4 mit der ersten wärmeren Stufe 51 thermisch verbunden sind. Somit kann der Supraleiter tiefer gekühlt werden und erlaubt den Einsatz von MTSL oder TTSL.

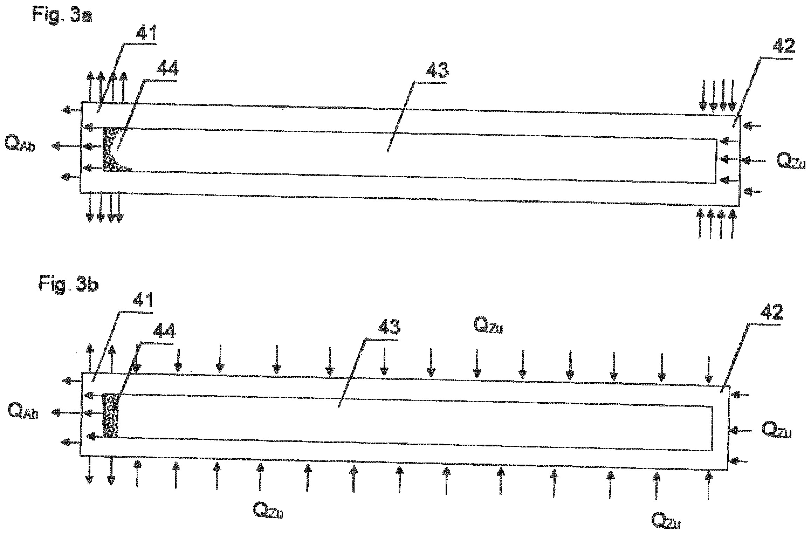

Fig. 3 erläutert das erfindungsgemäß angepasste System der Heatpipe: Die konventionell betriebene Heatpipe aus Fig. 3a nimmt an ihrem warmen Ende 42 Wärme Q_{zu} auf, z. B. von einer CPU, zum Verdampfen des Wärmeträgermediums 44. Der vergleichsweise lange Leitungsbereich 43 dient dabei nicht der Wärmeaufnahme aus der Umgebung. Am kalten Ende 41, welches z. B.: von einem Lüfter gekühlt wird, wird das durch den Leitungsbereich 43 transportierte Wärmeträgermedium abgekühlt und schlägt sich als Kondensat nieder. Die dabei freiwerdende Kondensationswärme Q_{ab} wird abgeführt.

Abweichend davon nimmt die erfindungsgemäß betriebene Heatpipe aus Fig. 3b fast über ihre ganze Länge nämlich dem warmen Ende 42 und auch dem Leitungsbereich 43 Wärme Q_{zu} aus der Umgebung auf, d. h. aus dem nicht dargestellten Gehäuse mit welchem die Heatpipe thermisch verbunden ist. Lediglich das kalte Ende 41, welches vom Kälteaggregat gekühlt wird, führt Wärme Q_{ab} aus der Heatpipe ab.

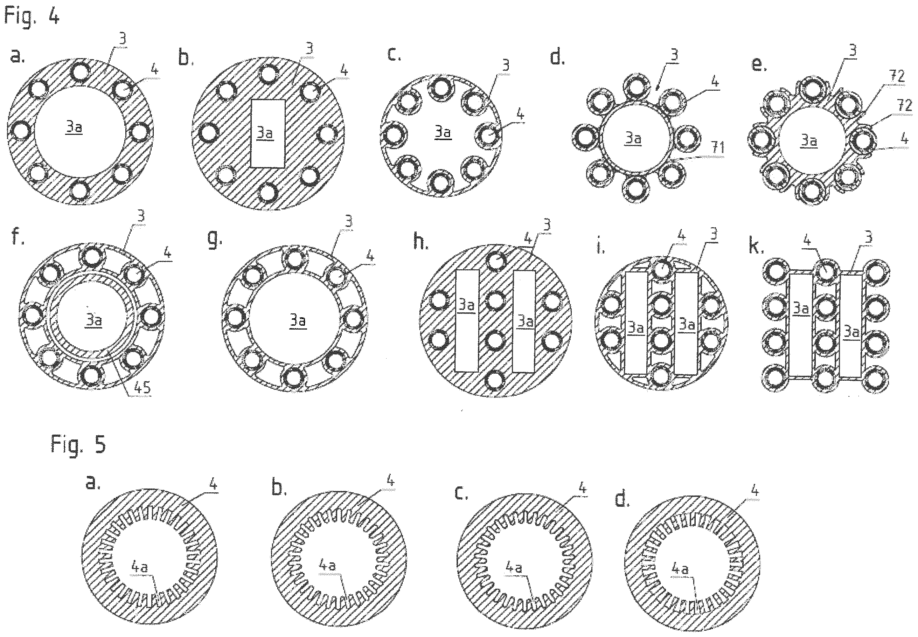

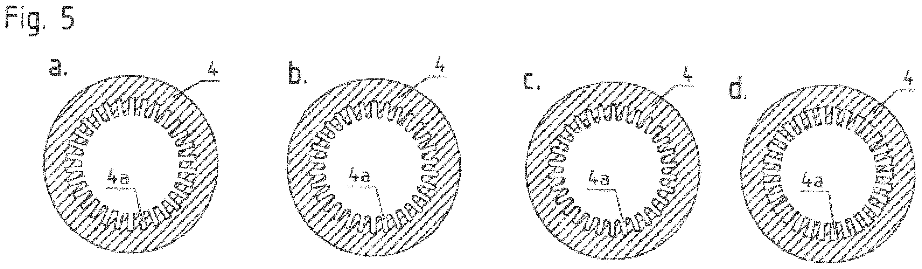

Fig. 4.a - 4.i zeigen verschiedene Profile des Gehäuses 3, welche im Strangpressverfahren herstellbar sind. Die großen Hohlräume 3a dienen zur Aufnahme der Supraleiter und die kleinen runden Hohlräume 4 zeigen den Querschnitt der in das Gehäuseprofil integrierten Heatpipes einschließlich der Kapillaren. Nicht dargestellt ist der Querschnitt der Supraleiterstapel im Hohlraum. Fig. 4.d und 4.e sind vorliegend nicht einstückig, z. B. mittels Strangpressen hergestellt. Die Wärmerohre 4 sind vielmehr an die Außenseite des Gehäuses 3 angesetzt, wobei die thermisch leitfähige Verbindung zwischen Wärmerohr und Gehäuse stoffschlüssig, z. B.: mittels Lot 71 oder formschlüssig, z. B.: mittels Klemmleisten 72 ist.

Fig. 4.f zeigt abweichend den Spezialfall, dass zusätzlich ein Kupferrohr 45 im Inneren dargestellt ist, das mit einem weiteren Kälteaggregat oder der zweiten Stufe eines zweistufigen Kälteaggregats auf eine tiefere Temperatur heruntergekühlt werden kann als das äußere Gehäuse 3 mit den integrierten Heatpipes 4, welche im Fall eines zweistufigen Kälteaggregats an dessen erste Stufe angeschlossen sind. Somit könnten auch Supraleiter mit tieferen Sprungtemperaturen eingesetzt werden, als die Solidustemperatur des Stickstoffs zulässt. Nicht dargestellt ist der Querschnitt der Supraleiterstapel im Hohlraum.

"Fig. 4 h.- 4. k zeigen verschiedene Profile mit denen ein zweipoliges Stromschienensystem aufgebaut werden kann, dessen Hin-und Rückleiter in getrennten, aber mechanisch verbundenen Kammern in einem Gehäuse geführt werden können und dessen Gehäuse in der Lage ist die auftretenden und gegeneinander abstoßend wirkenden Kräfte aufzunehmen, so dass sich die Wirkung der Kräfte neutralisiert und nicht nach außerhalb des Gehäuses wirkt."

Fig. 5.a - 5.d zeigen im vergrößerten Detail mögliche Ausprägungen der Kapillargeometrie, wie sie in Heatpipes 4 zu finden sind, wobei a. radial an der Innenseite angeordnete Schlitze 4a mit parallelen Schlitzflanken zeigt, b. wie a. aber mit gerundeten Ecken und Kanten, c. wie b. mit Rundungen, die aber den Grund des Schlitzes und den Kopf des Steges komplett verrunden und d. radial an der Innenseite angeordnete Stege mit parallelen Stegflanken zeigt.

## Patentansprüche

1. Stromschiene (1) für Hochstromverbraucher, mit
einem Supraleiter (2) zum Leiten eines elektrischen Stroms, welcher sich entlang der Stromschiene erstreckt;
einem Gehäuse (3) mit einem Wärmerohr (4) zum Kühlen des Supraleiters auf eine Temperatur unterhalb der Sprungtemperatur des Supraleiters, wobei das Wärmerohr (4), das Gehäuse (3) und der Supraleiter (2) sich entlang der Stromschiene (1) erstrecken,
das Wärmerohr (4) über seine Länge thermisch leitend mit dem Gehäuse (3) verbunden ist
wobei das Wärmerohr (4) umfasst: ein verdampfbares Wärmeträgermedium (44), ein kaltes Ende (41), ein warmes Ende (42) und einen Leitungsbereich (43) zwischen dem kalten und dem warmen Ende zum Zirkulieren des Wärmeträgermediums zwischen dem warmen und dem kalten Ende
einem Kühlaggregat (5) zum Kühlen des Wärmerohrs (4), welches mit dem kalten Ende (41) des Wärmerohrs thermisch leitend verbunden ist,
wobei
das Gehäuse (3) derart ausgestaltet ist, dass eine Vielzahl der Gehäuse an ihren Enden (31) miteinander in axialer Richtung verbindbar sind, so dass der Supraleiter (2) durch die Vielzahl der miteinander verbundenen Gehäuse (3) geführt und auf eine Temperatur unterhalb der Sprungtemperatur gekühlt werden kann und
das Gehäuse (3) mehrere Wärmerohre (4) umfasst,
**dadurch gekennzeichnet, dass**
jedes Wärmerohr (4) derart ausgebildet ist, dass für dieses eine dieKennzahl Druck in der Einheit bar mal. Volumen in der Einheit Liter kleiner als 50 bar*Liter ist oder das Volumen kleiner als 1 Liter ist.

2. Stromschiene nach Anspruch 1, **dadurch gekennzeichnet, dass** die Wärmerohre (4) sich nebeneinander entlang der Stromschiene (1) erstrecken.

3. Stromschiene nach einem der vorherigen Ansprüche, **dadurch gekennzeichnet, dass** die Wärmerohre (4) parallel zueinander und/oder zum Supraleiter (2) verlaufen.

4. Stromschiene nach einem der vorherigen Ansprüche, **dadurch gekennzeichnet, dass** die Wärmerohre (4) um den Supraleiter (2) herum angeordnet sind.

5. Stromschiene nach einem der vorherigen Ansprüche, **dadurch gekennzeichnet, dass** die Wärmerohre (4) im Inneren, im Querschnitt oder am Äußeren des Gehäuses angeordnet sind.

6. Stromschiene nach einem der vorherigen Ansprüche, **dadurch gekennzeichnet, dass** das Gehäuse (3) mit den Wärmerohren (4) thermisch leitend verbunden ist, das Gehäuse (3) den Supraleiter (2) umschließt und vorzugsweise das Gehäuse (3) von einer thermischen Isolierung (6) umgeben ist.

7. Stromschiene nach einem der vorherigen Ansprüche, **dadurch gekennzeichnet, dass** der Leitungsbereich (43) des Wärmerohrs als geschlossener Hohlraum in das Gehäuse (3) integriert ist.

8. Stromschiene nach Anspruch 7, **dadurch gekennzeichnet, dass** zusätzlich das kalte Ende (41) und/oder warme Ende (42) des Wärmerohrs als geschlossener Hohlraum in das Gehäuse (3) integriert ist.

9. Stromschiene nach einem der vorherigen Ansprüche 7 oder 8, **dadurch**
**gekennzeichnet, dass** der geschlossene Hohlraum in das Gehäuse (3) integriert ist, welches ein Strangpressprofil ist; und/oder
das Strangpressprofil aus Aluminium oder einer Aluminiumlegierung ist; und/oder das Gehäuse (3) eine Wandstärke aufweist in welcher die Vielzahl der Wärmerohre integriert ist; und/oder
das Gehäuse (3) als geschlossener Querschnitt, insbesondere Rohr, Rechteckprofil oder Mehrfachrechteckprofil, ausgebildet ist; und/oder
der Supraleiter (2), das Gehäuse (3) und die thermische Isolierung (6) koaxial von innen nach außen angeordnet sind und das oder die Wärmerohre (4) parallel zur Längsachse des Gehäuses (3) verlaufen; und/oder
das Gehäuse (3) gerade verläuft.

10. Stromschiene nach einem der vorherigen Ansprüche, **dadurch gekennzeichnet, dass**
das Wärmerohr (4) als Heatpipe ausgeführt ist; und/oder
im Leitungsbereich Kapillare zum Fördern des Wärmeträgermediums zwischen dem kalten und dem warmen Ende vorgesehen sind, wobei vorzugsweise die Kapillare als entlang der Heatpipe verlaufende Schlitze (4a) in der Innenwand des Leitungsbereichs ausgebildet sind.

11. Stromschiene nach einem der vorherigen Ansprüche, **dadurch gekennzeichnet, dass** im Inneren des Gehäuses eine weitere Kühlleitung (45) vorgesehen ist, welche thermisch leitend mit dem Supraleiter verbunden ist oder diesen umgibt, wobei vorzugsweise die weitere Kühlleitung (45) mit einem weiteren Kühlaggregat oder einer weiteren Stufe (52) des Kühlaggregats (5) verbunden ist und die weitere Kühlleitung (45) beispielsweise ein den Supraleiter einhüllendes Rohr aus Aluminium, Aluminiumlegierung, Kupfer, Kupferlegierung, oder ein Rohr mit einem weiteren Wärmerohr oder ein weiteres Wärmerohr ist oder umfasst.

12. Stromschiene nach dem vorherigen Anspruch, **dadurch gekennzeichnet, dass** ein zweistufiges Kälteaggregat (5) vorhanden ist und die Wärmerohre (4) mit dessen erster Stufe (51) und die weitere Kühlleitung (45) mit dessen zweiter Stufe (52) thermisch leitend verbunden ist; und/oder
das Gehäuse sich beidseitig vom Kühlaggregat weg erstreckt und sich vom Kühlaggregat zwei Wärmerohre sich beidseitig entgegengesetzt wegerstrecken.

13. Stromschiene nach einem der vorherigen Ansprüche, **dadurch gekennzeichnet, dass** der Supraleiter gestapelt angeordnete Bänder aus supraleitendem Material umfasst, welche einen starren oder flexiblen Supraleiter bilden, wobei der Supraleiter vorzugsweise eine um seine Längsachse biegesteife Tragschiene aufweist.

14. Stromschiene nach einem der vorherigen Ansprüche, **dadurch gekennzeichnet, dass**
die Heatpipes eine Länge von 50-1500 cm haben; und/oder
die Heatpipes einen Durchmesser von 0,5 - 2,5 cm haben; und/oder
das Gehäuse einen Außendurchmesser von 2 - 50 cm hat.

## Claims

1. Bus bar (1) for high current consumers, comprising:
a superconductor (2) for conducting an electric current extending along the bus bar;
a housing (3) with a heat pipe (4) for cooling the superconductor to a temperature below the transition temperature of the superconductor, wherein the heat pipe (4), the housing (3) and the superconductor (2) extend along the bus bar (1),
the heat pipe (4) is thermally conductively connected to the housing (3) along its length, wherein the heat pipe (4) comprises: an evaporable heat transfer medium (44), a cold end (41), a hot end (42), and a conduction region (43) between the cold and hot ends for circulating the heat transfer medium between the hot and cold ends
a cooling unit (5) for cooling the heat pipe (4), which is thermally conductively connected to the cold end (41) of the heat pipe,
wherein
the housing (3) is configured such that a plurality of the housings are connectable to each other at their ends (31) in an axial direction so that the superconductor (2) can be passed through the plurality of the interconnected housings (3) and cooled to a temperature below the transition temperature, and
the housing (3) comprises a plurality of heat pipes (4),
**characterised in that**
each heat pipe (4) is designed in such a way that a characteristic number of pressure in the unit bar multiplied with volume in the unit litre is smaller than 50 bar*litre or the volume is smaller than 1 litre.

2. Bus bar according to claim 1, **characterised in that** the heat pipes (4) extend side by side along the bus bar (1).

3. Bus bar according to one of the preceding claims, **characterised in that** the heat pipes (4) run parallel to each other and/or to the superconductor (2).

4. Bus bar according to one of the preceding claims, **characterised in that** the heat pipes (4) are arranged around the superconductor (2).

5. Bus bar according to one of the preceding claims, **characterised in that** the heat pipes (4) are arranged in the interior, in the cross-section or on the exterior of the housing.

6. Bus bar according to one of the preceding claims, **characterized in that** the housing (3) is thermally conductively connected to the heat pipes (4), the housing (3) encloses the superconductor (2) and preferably the housing (3) is surrounded by a thermal insulation (6).

7. Bus bar according to one of the preceding claims, **characterised in that** the conduction region (43) of the heat pipe is integrated in the housing (3) as a closed cavity.

8. Bus bar according to claim 7, **characterised in that** in addition the cold end (41) and/or the warm end (42) of the heat pipe is integrated in the housing (3) as a closed cavity.

9. Bus bar according to one of the preceding claims 7 or 8, **characterized in that** the closed cavity is integrated in the housing (3), which is an extruded profile; and/or
the extruded profile is made of aluminium or an aluminium alloy; and/or
the housing (3) has a wall thickness in which the plurality of heat pipes is integrated; and/or
the housing (3) is formed as a closed cross-section, in particular a tube, rectangular profile or multiple rectangular profile; and/or
the superconductor (2), the housing (3) and the thermal insulation (6) are arranged coaxially from the inside to the outside and the heat pipe or heat pipes (4) run parallel to the longitudinal axis of the housing (3); and/or
the housing (3) is straight.

10. Bus bar according to one of the preceding claims, **characterized in that**
the heat pipe (4) is designed as a capillary-action heat pipe; and/or
capillaries are provided in the conduction region for conveying the heat transfer medium between the cold and the hot end, wherein preferably the capillaries are formed as slots (4a) running along the capillary-action heat pipe in the inner wall of the conduction region.

11. Bus bar according to one of the preceding claims, **characterised in that** a further cooling line (45) is provided in the interior of the housing, which is thermally conductively connected to the superconductor or surrounds it, wherein the further cooling line (45) is preferably connected to a further cooling unit or a further stage (52) of the cooling unit (5) and the further cooling line (45) is or comprises, for example, a tube of aluminium, aluminium alloy, copper, copper alloy, or a tube with a further heat pipe or a further heat pipe, enveloping the superconductor.

12. Bus bar according to the preceding claim, **characterized in that** a two-stage cooling unit (5) is present and the heat pipes (4) are thermally conductively connected to its first stage (51) and the further cooling line (45) to its second stage (52); and/or
the housing extends away from the cooling unit on both sides and two heat pipes extend away from the cooling unit on both sides in opposite directions.

13. Bus bar according to one of the preceding claims, **characterised in that** the superconductor comprises stacked strips of superconducting material forming a rigid or flexible superconductor, wherein the superconductor preferably comprises a support rail which is resistant to bending about its longitudinal axis.

14. Bus bar according to one of the preceding claims, **characterized in that**
the capillary-action heat pipes have a length of 50-1500 cm; and/or
the capillary-action heat pipes have a diameter of 0.5 - 2.5 cm; and/or
the housing has an outer diameter of 2-50 cm.

## Revendications

1. Rail conducteur (1) pour consommateurs de courant élevé, avec
un supraconducteur (2) pour conduire un courant électrique qui s'étend le long de la barre conductrice ;
un boîtier (3) avec un tube de chaleur (4) pour refroidir le supraconducteur à une température inférieure à la température de transition du supraconducteur, dans lequel le tube de chaleur (4), le boîtier (3) et le supraconducteur (2) s'étendent le long de la barre conductrice (1),
le tube de chaleur (4) est relié au boîtier (3) de manière thermiquement conductrice sur sa longueur
dans lequel le tube de chaleur (4) comprend : un milieu caloporteur évaporable (44), une extrémité froide (41), une extrémité chaude (42) et une zone de conduite (43) entre l'extrémité froide et l'extrémité chaude pour faire circuler le milieu caloporteur entre l'extrémité chaude et l'extrémité froide,
un agrégat de refroidissement (5) pour refroidir le tube de chaleur (4), qui est relié de manière thermiquement conductrice à l'extrémité froide (41) du tube de chaleur, dans lequel
le boîtier (3) est conçu de telle sorte qu'une pluralité de boîtiers peuvent être reliés entre eux en direction axiale à leurs extrémités (31), de sorte que le supraconducteur (2) peut être guidé à travers la pluralité de boîtiers (3) reliés entre eux et peut être refroidi à une température inférieure à la température de transition et
le boîtier (3) comprend plusieurs tubes de chaleur (4),
**caractérisé en ce que**
chaque tube de chaleur (4) est conçu de telle sorte que pour celui-ci un chiffre clé pression dans l'unité bar fois volume dans l'unité litre est inférieur à 50 bar*litre ou le volume est inférieur à 1 litre.

2. Rail conducteur selon la revendication 1, **caractérisé en ce que** les tubes de chaleur (4) s'étendent les uns à côté des autres le long du rail conducteur (1).

3. Rail conducteur selon l'une des revendications précédentes, **caractérisé en ce que** les tubes de chaleur (4) s'étendent parallèlement les uns aux autres et/ou au supraconducteur (2).

4. Rail conducteur selon l'une des revendications précédentes, **caractérisé en ce que** les tubes de chaleur (4) sont disposés autour du supraconducteur (2).

5. Rail conducteur selon l'une des revendications précédentes, **caractérisé en ce que** les tubes de chaleur (4) sont disposés à l'intérieur, dans la section transversale ou à l'extérieur du boîtier.

6. Rail conducteur selon l'une des revendications précédentes, **caractérisé en ce que** le boîtier (3) est relié de manière thermiquement conductrice aux tubes de chaleur (4), le boîtier (3) entoure le supraconducteur (2) et, de préférence, le boîtier (3) est entouré d'une isolation thermique (6).

7. Rail conducteur selon l'une des revendications précédentes, **caractérisé en ce que** la plage de conduction (43) du tube de chaleur est intégrée dans le boîtier (3) en tant que cavité fermée.

8. Rail conducteur selon la revendication 7, **caractérisé en ce que**, en outre, l'extrémité froide (41) et/ou chaude (42) du tube de chaleur est intégrée dans le boîtier (3) en tant que cavité fermée.

9. Rail conducteur selon l'une des revendications précédentes 7 ou 8, **caractérisé en ce que**
la cavité fermée est intégrée dans le boîtier (3), qui est un profilé extrudé ; et/ou
le profilé extrudé est en aluminium ou en alliage d'aluminium ; et/ou
le boîtier (3) présente une épaisseur de paroi dans lequel la pluralité de tubes de chaleur est intégrée ; et/ou
le boîtier (3) est conçu comme section transversale fermée, en particulier tube, profilé rectangulaire ou profilé rectangulaire multiple ; et/ou
le supraconducteur (2), le boîtier (3) et l'isolation thermique (6) sont disposés coaxialement de l'intérieur vers l'extérieur et le ou les tubes de chaleur (4) s'étendent parallèlement à l'axe longitudinal du boîtier (3) ; et/ou
le boîtier (3) s'étend de manière rectiligne.

10. Rail conducteur selon l'une des revendications précédentes, **caractérisé en ce que** le tube de chaleur (4) est réalisé en tant que caloduc ; et/ou
des capillaires sont prévus dans la plage de conduite pour transporter le medium caloporteur entre l'extrémité froide et chaude, dans lequel les capillaires sont de préférence conçus comme des fentes (4a) s'étendant le long du caloduc dans la paroi intérieure de la plage de conduite.

11. Rail conducteur selon l'une des revendications précédentes, **caractérisé en ce qu'**une autre conduite de refroidissement (45) est prévue à l'intérieur du boîtier, laquelle est reliée de manière thermiquement conductrice au supraconducteur ou entoure celui-ci, dans lequel, de préférence, l'autre conduite de refroidissement (45) est reliée à un autre agrégat de refroidissement ou à un autre étage (52) de l'agrégat de refroidissement (5) et l'autre conduite de refroidissement (45) est ou comprend par exemple un tube en aluminium, en alliage d'aluminium, en cuivre, en alliage de cuivre enveloppant le supraconducteur ou un tube avec un autre tube de chaleur ou un autre tube de chaleur.

12. Rail conducteur selon la revendication précédente, **caractérisé en ce qu'**un agrégat frigorifique à deux étages (5) est présent et que, de manière thermiquement conductrice, les tubes de chaleur (4) sont reliés à son premier étage (51) et l'autre conduite de refroidissement (45) à son deuxième étage (52) ; et/ou
le boîtier s'étend au loin des deux côtés de l'agrégat de refroidissement et deux tubes de chaleur s'étendent au loin des deux côtés de l'agrégat de refroidissement de manière opposée.

13. Rail conducteur selon l'une quelconque des revendications précédentes, **caractérisé en ce que** le supraconducteur comprend des bandes de matériau supraconducteur empilées, qui forment un supraconducteur rigide ou flexible, dans lequel le supraconducteur comprend de préférence un rail de support résistant à la flexion autour de son axe longitudinal.

14. Rail conducteur selon l'une quelconque des revendications précédentes, **caractérisé en**
**ce que** les caloducs ont une longueur de 50 à 1500 cm ; et/ou
les caloducs ont un diamètre de 0,5 - 2,5 cm ; et/ou
le boîtier a un diamètre extérieur de 2 - 50 cm.
